# EUROPEAN PATENT APPLICATION

(11) **EP 3 073 681 A1**
(43) Date of publication of application: **28.09.2016**
(21) Application number: 14864442.0
(22) Date of filing: 18.06.2014
(51) Int. Cl.: H04L 12/58, G06F 17/30

(54) **SOCIAL NETWORK INFORMATION PUSHING METHOD AND APPARATUS**

(30) Priority: 20.11.2013 CN 201310589656
(71) Applicant: ZTE Corporation, Guangdong Province 518057 (CN)
(72) Inventor: ZHANG, Jiancheng, Shenzhen Guangdong Porvince 518057 (CN)
(74) Representative: Novagraaf Technologies
(86) International application number: PCT/CN2014/080247
(87) International publication number: WO 2015/074414

(57) **Abstract**

Provided are a method and device for pushing social network information. According to the method, after a login authority to a social network is obtained, instant information within a current dynamic pull time length is acquired from the social website according to the current dynamic pull time length and then is pushed; time record information of latest first preset threshold pieces of information including the instant information is acquired from records of the social network, and an average pull time length for the social website to correspondingly push second preset threshold pieces of information is calculated; the calculated average pull time length is set as the dynamic pull time length for the social website to perform a next round of information pushing. A device corresponding to the method is also provided. According to the method and device, real-time adjustment of the pull time length is realized, so that information pushing can be performed according to the frequency that a user conducts social activities, and a dynamic Pull mode for information pushing is realized; therefore, information can be pushed in real time and reasonably, and network resources and terminal electricity can be saved.

## Description

### Technical Field

The present disclosure relates to the field of communications of Internet information, and in particular to a method and device for pushing social network information.

### Background

With the vigorous development of social networks, a vast number of users have registered in websites of various social networks through accessing the Internet via mobile terminals, and will add or update their latest news in the social websites. A social network provider establishes an open platform of a social network and applies the open platform to a larger scope of social information spreading to expand the scope of the provider's impact. A third-party application program will acquire and spread social network information of a user after being authorized by the user of the open platform supplied by the provider. Generally, the user needs to actively acquire the social network information in a pulling way, and in such a way, the user is usually not able to acquire the information in time. Furthermore, too much manual operation will affect the use of the social network by the user. Therefore, an information pushing technology rises to reduce active intervention of the user and facilitate acquisition of the information.

At present, there are two main modes for pushing social network information which are respectively described as follows. (1) A Pull mode: an application program periodically connects to a server and inquires whether there is new information arriving, wherein a pull frequency is needed to be set reasonably; if the pull frequency is set too high, too much network flow will be caused and too much electricity of a user terminal will be consumed. (2) A Push mode: this solution can solve the problem existing in the Pull mode that the user can not be notified of the information in real time, but the problem that too much electricity of the user terminal will be consumed still exists, particularly when each application adopts this mode respectively. Although a pushing service of an IOS platform adopts the mode (2), an extra transit server is needed to be introduced to the platform, and each user terminal (rather than a single application program) only keeps one application connected with the transit server, in such a way, the network flow and the electricity consumption of the user terminal can be saved to a very large extent. Although an Android platform has a similar service (a Cloud to Device Messaging service provided by Google), it is very difficult to stably use this service in social applications of all Android terminals due to limits of services provided by the open platform of the social website. Similarly, a good push service can be well realized via a third-party pushing platform and services, but the use of the third-party pushing platform will bring extra application cost to information pushing.

Due to the limits of the services provided by the open platform of the social website, the social network information is acquired from the open platform of the social network mostly with the Pull mode. Such a mode is easy to realize without depending on an extra server, and low in cost. However, the Pull mode always uses a fixed period to request a server to push information, as a result, under both conditions of presetting the period by an application program and manually setting the period by a user, there still exist problems that the information cannot be acquired in real time when the period is set to be too large and the network flow and the electricity of a user terminal will be high when the period is set to be too small,.

### Summary

To solve the technical problems, the embodiments of the present disclosure provide a method and a device for pushing social network information, which can push information in real time and reduce network flow and consumed electricity of a terminal.

According to an embodiment of the present disclosure, a method for pushing social network information is provided, including:
instant information within a current dynamic pull time length is acquired from the social website according to the current dynamic pull time length and then is pushed;
time record information of latest first preset threshold pieces of information including the instant information is acquired from records of the social network, and an average pull time length for the social website to correspondingly push second preset threshold pieces of information is calculated;
the calculated average pull time length is set as the dynamic pull time length for the social website to perform a next round of information pushing.

In an exemplary embodiment, before the instant information within the current dynamic pull time length is acquired from the social website according to the current dynamic pull time length, the method further includes: a time length for the social website to acquire second preset threshold pieces of information is recorded as the current dynamic pull time length.

In an exemplary embodiment, under a condition that, within the current dynamic pull time length, a user actively accesses the social network and information is pushed, the method further includes:
timekeeping according to the dynamic pull time length is restarted.

In an exemplary embodiment, the second preset threshold is a value which is determined by the user and indicates the number of pieces of information for information pushing;
the second preset threshold is set to be identical or different for different users, different social websites and different time segments.

In an exemplary embodiment, the first preset threshold is:
the number of pieces of pushed information, which is a preset multiple of the current dynamic pull time length; or,
a number which is not greater than a preset maximum number of records.

According to another embodiment, a device for pushing social network information is provided, including:
a timekeeping element, which is configured to receive a second notice from a pushing element, perform timekeeping according to a dynamic pull time length, and transmit a first notice to the pushing element upon expiration of the dynamic pull time length;
a pushing element, which is configured to receive the first notice form the timekeeping element, acquire instant information within the dynamic pull time length from a social website, push the instant information, and transmit the second notice to the timekeeping element upon completion of the information pushing;
an acquiring element, which is configured to acquire, from records of the social network, time record information of latest first preset threshold pieces of information including the instant information, calculate an average pull time length for the social website to correspondingly push second preset threshold pieces of information, and set the average pull time length as the dynamic pull time length for a next round of information pushing.

In an exemplary embodiment, the timekeeping element is further configured to record a time length for the social website to acquire second preset threshold pieces of information, and transmit the time length to the timekeeping element as the dynamic pull time length.

In an exemplary embodiment, under a condition that, within the dynamic pull time length, the pushing element receives an external instruction and performs information pushing, the timekeeping element is configured to restart the timekeeping according to the current dynamic pull time length.

In an exemplary embodiment, the first preset threshold is:
the number of pieces of pushed information, which is a preset multiple of the current dynamic pull time length; or,
a number which is not greater than a preset maximum number of records.

The present disclosure provides a method for pushing social network information. According to the method, after a login authority to a social network is obtained, instant information within a current dynamic pull time length is acquired from the social website according to the current dynamic pull time length, and then is pushed; time record information of latest first preset threshold pieces of information including the instant information is acquired from records of the social network, and an average pull time length for the social website to correspondingly push second preset threshold pieces of information is calculated; and the calculated average pull time length is set as the dynamic pull time length for the social website to perform a next round of information pushing. The present disclosure further discloses a device corresponding to the method. According to the technical solution, real-time adjustment of the pull time length is realized, so that information pushing can be performed according to the frequency that a user conducts social activities, and a dynamic Pull mode for information pushing is realized; therefore, information can be pushed in real time and reasonably, and network resources and terminal electricity can be saved.

### Brief Description of the Drawings

The drawings are described here to provide further understanding of the present disclosure, and form a part of the present disclosure. The schematic embodiments and description of the present disclosure are adopted to explain the present disclosure, and do not form improper limits to the present disclosure. In the drawings:
Fig. 1 shows a flowchart of a method for pushing social network information according to an embodiment of the present disclosure; and
Fig. 2 shows a structural diagram of a device for pushing social network information according to an embodiment of the present disclosure;

### Detailed Description of the Embodiments

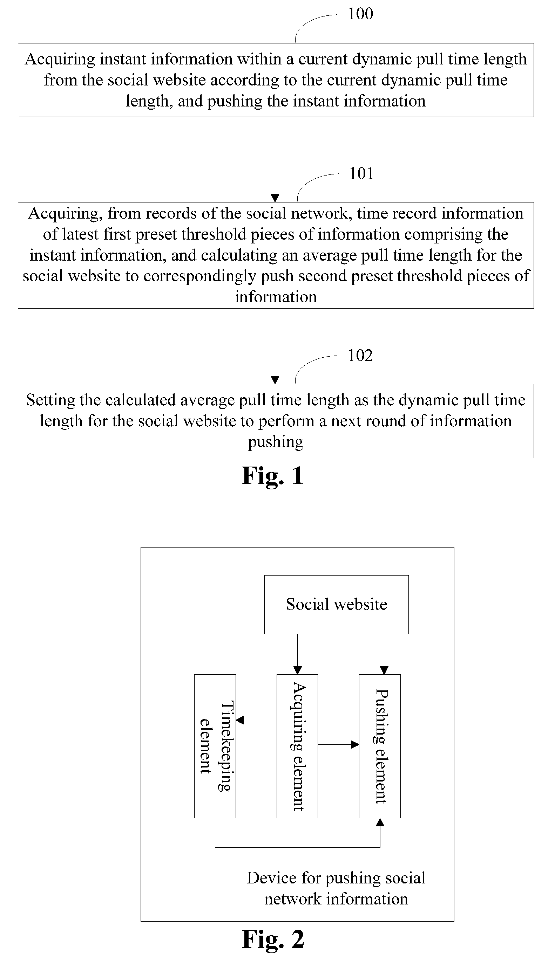

Fig. 1 shows a flowchart of a method for pushing social network information according to an embodiment of the present disclosure. As shown in Fig. 1, after a login authority to a social network is obtained, the method includes:
Step 100: instant information within a current dynamic pull time length is acquired from the social website according to the current dynamic pull time length, and then is pushed.

Before this step, the method may further include: a time length for the social website to acquire second preset threshold pieces of information is recorded as the current dynamic pull time length.
Step 101: time record information of latest first preset threshold pieces of information including the instant information is acquired from records of the social network, and an average pull time length for the social website to correspondingly push second preset threshold pieces of information is calculated.

In this step, the second preset threshold may be a value which is determined by the user and indicates the number of pieces of information for information pushing;
the second preset threshold may be set to be identical or different for different users, different social websites and different time segments.

It should be noted that the second preset threshold may be a default parameter obtained by statistical calculation.

In an exemplary embodiment, the first preset threshold may be: the number of pieces of pushed information, which is a preset multiple of the current dynamic pull time length; or,
a number which is not greater than a preset maximum number of records.

It should be noted that a minimum value of the first preset threshold is greater than a maximum value of the second preset threshold, and the specific values will be set according to an actual condition, different users, different time periods and the like.
Step 102: the calculated average pull time length is set as a dynamic pull time length of the social website for information pushing at the next time.

Under a condition that, within the current dynamic pull time length, a user actively accesses the social network and information is pushed, the method may further include:
timekeeping according to the dynamic pull time length is restarted.

It should be noted that different first preset thresholds and second preset thresholds may be set for different users in different time segments. A person skilled in the art may adopt a conventional technical means to correspondingly design this part on the premise of realizing the method of the present disclosure.

Fig. 2 shows a structural diagram of a device for pushing social network information according to an embodiment of the present disclosure. As shown in Fig. 2, the device includes:
a timekeeping element, which is configured to receive a second notice from a pushing element, perform timekeeping according to a dynamic pull time length, and transmit a first notice to the pushing element upon expiration of the dynamic pull time length;
the timekeeping element is further configured to record a time length for the social website to acquire second preset threshold pieces of information, and transmit the time length to the timekeeping element as the dynamic pull time length
a pushing element, which is configured to receive the first notice form the timekeeping element, acquire instant information within the dynamic pull time length from a social website, push the instant information, and transmit the second notice to the timekeeping element upon completion of the information pushing.

Under a condition that, within the dynamic pull time length, the pushing element receives an external instruction and performs information pushing, the timekeeping element is configured to restart the timekeeping according to the current dynamic pull time length. It should be noted that the external instruction here may be an instruction generated when a user accesses the social website, and this is consistent with a message pushing method generated by use of the social website in the related art.

An acquiring element, which is configured to acquire, from records of the social network, time record information of latest first preset threshold pieces of information including the instant information, calculate an average pull time length for the social website to correspondingly push second preset threshold pieces of information, and set the average pull time length as the dynamic pull time length for a next round of information pushing.

The first preset threshold may be: the number of pieces of pushed information, which is a preset multiple of the current dynamic pull time length; or,
a number which is not greater than a preset maximum number of records.

The device may be connected to a mobile terminal or may be arranged on a mobile terminal to realize information pushing of social networks.

The above method and device are only exemplary embodiments of the present disclosure, and not intended to limit the scope of invention of the present disclosure therefore. The embodiments of the present disclosure only list some normally used methods, however, any modification, equivalent replacement and improvement which are made according to the principle of the present disclosure without departing from the concept of the present disclosure shall fall within the scope of protection defined by the claims of the present disclosure.

### Industrial Applicability

The technical solutions provided by the embodiments of the present disclosure can be applied to a social network information pushing process. After a login authority to a social network is obtained, instant information within a current dynamic pull time length is acquired from the social website according to the current dynamic pull time length and then is pushed, time record information of latest first preset threshold pieces of information including the instant information is acquired from records of the social network, an average pull time length for the social website to correspondingly push second preset threshold pieces of information is calculated, and the calculated average pull time length is set as the dynamic pull time length for the social website to perform a next round of information pushing, real-time adjustment of the pull time length. In this way, information pushing can be performed according to the frequency that a user conducts social activities, and a dynamic Pull mode for information pushing is realized; therefore, information can be pushed in real time and reasonably, and network resources and terminal electricity can be saved.

## Claims

1. A method for pushing social network information, wherein after a login authority to a social network is acquired, the method comprises:
acquiring, according to a current dynamic pull time length, instant information within the current dynamic pull time length from the social website, and pushing the instant information;
acquiring, from records of the social network, time record information of latest first preset threshold pieces of information comprising the instant information, and calculating an average pull time length for the social website to correspondingly push second preset threshold pieces of information;
setting the calculated average pull time length as the dynamic pull time length for the social website to perform a next round of information pushing.

2. The method for pushing social network information as claimed in claim 1, wherein before the instant information within the current dynamic pull time length is acquired from the social website according to the current dynamic pull time length, the method further comprises: recording a time length for the social website to acquire second preset threshold pieces of information as the current dynamic pull time length.

3. The method for pushing social network information as claimed in claim 1, wherein under a condition that, within the current dynamic pull time length, a user actively accesses the social network and information is pushed, the method further comprises:
restarting timekeeping according to the dynamic pull time length.

4. The method for pushing social network information as claimed in claim 1, wherein the second preset threshold is a value which is determined by the user and indicates the number of pieces of information for information pushing;
the second preset threshold is set to be identical or different for different users, different social websites and different time segments.

5. The method for pushing social network information as claimed in claim 1, wherein the first preset threshold is:
the number of pieces of pushed information, which is a preset multiple of the current dynamic pull time length; or,
a number which is not greater than a preset maximum number of records.

6. A device for pushing social network information, comprising:
a timekeeping element, which is configured to receive a second notice from a pushing element, perform timekeeping according to a dynamic pull time length, and transmit a first notice to the pushing element upon expiration of the dynamic pull time length;
a pushing element, which is configured to receive the first notice form the timekeeping element, acquire instant information within the dynamic pull time length from a social website, push the instant information, and transmit the second notice to the timekeeping element upon completion of the information pushing;
an acquiring element, which is configured to acquire, from records of the social network, time record information of latest first preset threshold pieces of information comprising the instant information, calculate an average pull time length for the social website to correspondingly push second preset threshold pieces of information, and set the average pull time length as the dynamic pull time length for a next round of information pushing.

7. The device for pushing social network information as claimed in claim 6, wherein the timekeeping element is further configured to record a time length for the social website to acquire second preset threshold pieces of information, and transmit the time length to the timekeeping element as the dynamic pull time length.

8. The device for pushing social network information as claimed in claim 6, wherein under a condition that, within the dynamic pull time length, the pushing element receives an external instruction and performs information pushing, the timekeeping element is configured to restart the timekeeping according to the current dynamic pull time length.

9. The device for pushing social network information as claimed in claim 6, wherein the first preset threshold is:
the number of pieces of pushed information, which is a preset multiple of the current dynamic pull time length; or,
a number which is not greater than a preset maximum number of records.
